# EUROPEAN PATENT APPLICATION

(11) **EP 2 208 845 A1**
(43) Date of publication of application: **21.07.2010**
(21) Application number: 08847188.3
(22) Date of filing: 05.11.2008
(51) Int. Cl.: E05F 1/10, E05F 3/08, F16F 9/10

(54) **DOOR CLOSER**

(30) Priority: 08.11.2007 JP 2007290814
(71) Applicant: Nitto Kohki Co., Ltd., Tokyo 146-8555 (JP)
(72) Inventor: OKADA, Tadashi, Tokyo 146-8555 (JP)
(74) Representative: Kling, Simone
(86) International application number: PCT/JP2008/070106
(87) International publication number: WO 2009/060851

(57) **Abstract**

A door closer of simple structure has a stationary shaft (10) and a cylindrical housing (20) secured to a door. The housing (20) has therein a nonrotatable piston (80), an inner communicating passage (83) with a check valve (84) that communicates between a high-pressure oil chamber (81) and a low-pressure oil chamber (82) at the opposite sides of the piston (80), an outer communicating passage (102 and 104) that passes oil from the high-pressure oil chamber (81) toward the low-pressure oil chamber (82) when the piston (80) is displaced from the low-pressure oil chamber (82) side toward the high-pressure oil chamber (81) side, a high-pressure side cam member (91), and a low-pressure side cam member (96). When the housing (20) is rotated by the door being opened, the high-pressure side cam member (91) pushes out the piston (80) from the high-pressure oil chamber (81) side toward the low-pressure oil chamber (82) side. When the door is rotated in a door-closing direction, the low-pressure side cam member (96) pushes out the piston (80) from the low-pressure oil chamber (82) side toward the high-pressure oil chamber (81) side.

## Description

### Technical Field:

The present invention relates to a door closer applicable to a swing door that can swing open to both the left and right.

### Background Art:

A door closer applicable to a swing door is disclosed, for example, in Japanese Patent No. 3,766,666.

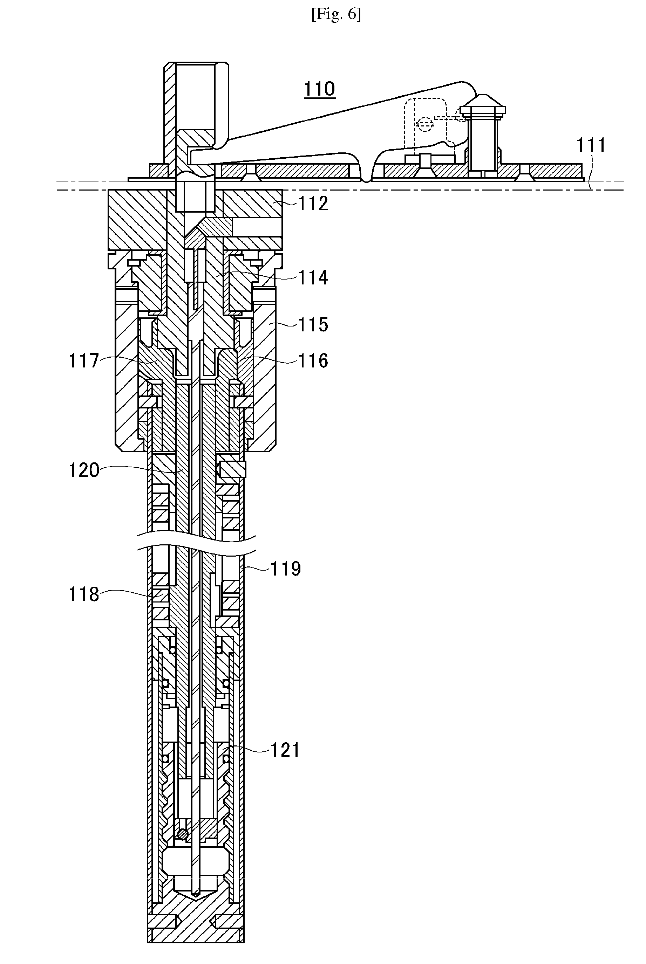

The door closer disclosed in the above-mentioned patent has a spring device and a damper device, as shown in Fig. 6. The spring device has a shaft 114 vertically secured to a door opening frame 110 and a door-side fixed member 112 rotatable about the shaft and fixed to a door 111. The spring device stores a door-returning force generated in response to opening of the door, regardless of whether the door is opened to the left or right. The damper device brakes the door when urged to close by the spring device after it has been opened. The spring device and the damper device are actuated by an outer ring 116 and an inner ring 117 installed between the shaft 114 and the door-side fixed member 112. More specifically, when the door is opened to one of the left and right sides from a door closed position and then closed, the inner ring 116 is at rest, while the outer ring 117 is rotated together with the door. When the door is opened and closed on the other of the left and right sides of the door closed position, the outer ring is at rest, while the inner ring is rotated together with the door. Thus, when the door is opened, the inner ring is rotated in a fixed direction relative to the outer ring, regardless of whether the door is opened to the left or right, and when the door is closed, the inner ring is rotated in the opposite direction to the above relative to the outer ring. The spring device has a coil spring 118 installed to extend in the longitudinal axial direction of the above-described shaft. One end of the coil spring 118 moves together with the inner ring 117, and the other end of the coil spring 118 moves together with the outer ring 116. Thus, when the door is opened, the coil spring 118 is wound up to store energy, regardless of whether the door is opened to the left or right. The damper device has a cylindrical member 119 secured to the outer ring 116 and extending in the axial direction and a piston screw 121 that is thread-engaged with the inner wall surface of the cylindrical member and that is axially slidable but nonrotatable relative to a damper shaft 109 extending from the inner ring 117. As has been stated above, the direction of relative rotation between the inner ring and the outer ring when the door is opened is fixed, and the relative rotation direction when the door is closed is opposite to that when the door is opened. Therefore, when the door is opened, the piston screw moves in a fixed axial direction, and when the door is closed, the piston screw moves in the opposite direction. When moving in the opposite direction, the piston screw is subjected to a large fluid resistance, thereby braking the movement of the piston screw and thus applying brakes to the closing door.

### Disclosure of Invention:

### Technical Problem:

In the door closer of the above-mentioned patent, both the spring device and the damper device are arranged to operate in relation to a pair of inner and outer rings, as stated above. Therefore, the door closer is complicated in structure.

An object of the present invention is to provide a swing door closer of simpler structure having a spring device and a damper device.

### Solution to Problem:

The present invention provides a swing door closer including a stationary shaft (denoted by reference numeral 10 in the following embodiment) secured to a door opening frame, a cylindrical housing (20) installed concentrically around the stationary shaft and secured to a door rotatably about the longitudinal axis of the stationary shaft together with the door, and a damper device (B) installed in the housing. The damper device has a piston (80) installed in the housing (20) displaceably relative to the stationary shaft (10) in the longitudinal axis direction but nonrotatably relative to the stationary shaft around the longitudinal axis, a high-pressure oil chamber (81) provided in the housing (20) at one side of the piston (80) in the longitudinal axis direction, a low-pressure oil chamber (82) provided in the housing (20) at the other side of the piston (80) in the longitudinal axis direction, an inner communicating passage (83) extending through the piston (80) along the center axis to communicate between the high-pressure oil chamber (81) and the low-pressure oil chamber (82), and a check valve (84) provided in the inner communicating passage (83). The check valve allows oil to flow from the low-pressure oil chamber (82) into the high-pressure oil chamber (81) when the piston (80) is displaced from the high-pressure oil chamber (81) side toward the low-pressure oil chamber (82) side but cuts off communication between the low-pressure oil chamber (82) and the high-pressure oil chamber (81) when the piston (80) is displaced from the low-pressure oil chamber (82) side toward the high-pressure oil chamber (81) side. The damper device further has an outer communicating passage (which comprises, in the following embodiment, a first and second communicating passages 102 and 104, and a third communicating passage, which is not shown in the figures) communicating between the high-pressure oil chamber (81) and the low-pressure oil chamber (82) to pass oil in the high-pressure oil chamber (81) pressurized by the piston (80) toward the low-pressure oil chamber (82) when the piston (80) is displaced from the low-pressure oil chamber (82) side toward the high-pressure oil chamber (81) side. The outer communicating passage has a larger fluid resistance than that of the inner communicating passage (83) and gives a resistance to the displacement of the piston (80) from the low-pressure oil chamber (82) side toward the high-pressure oil chamber (81) side. Further, the damper device has a cam mechanism having a high-pressure side cam member (91) provided in and secured to the housing (20) at the high-pressure oil chamber side of the piston (80) in the longitudinal axis direction and a low-pressure side cam member (96) provided in and secured to the housing at the low-pressure oil chamber side of the piston. When the housing (20) is selectively rotated relative to the stationary shaft (10) in either of clockwise and counterclockwise door-opening directions about the longitudinal axis from a reference position, the high-pressure side cam member (91) pushes out the piston (80) from the high-pressure oil chamber (81) side toward the low-pressure oil chamber ( 82) side. When the housing (20) having been rotated in either of the door-opening directions is rotated in a door-closing direction toward the reference position, the low-pressure side cam member (96) pushes out the piston (80) from the low-pressure oil chamber (82) side toward the high-pressure oil chamber (81) side.

In this door closer, when a door-opening operation is performed, the housing is moved in a door-opening direction from the reference position by the door being opened, and the piston is pushed out from the high-pressure oil chamber side toward the low-pressure oil chamber side by the high-pressure side cam member secured to the housing, thereby allowing the oil in the low-pressure oil chamber to be sent into the high-pressure oil chamber with a low resistance through the check valve in the inner communicating passage. Accordingly, the door-opening operation can be performed without encountering resistance. When the opened door is closed, on the other hand, the housing is moved toward the reference position by the door being closed, and the piston is pushed out from the low-pressure oil chamber side toward the high-pressure oil chamber side by the low-pressure side cam member secured to the housing. At this time, the check valve is closed. Therefore, the oil in the high-pressure oil chamber is sent into the low-pressure oil chamber through the outer communicating passage. The outer communicating passage can be adjusted to give a predetermined flow path resistance to the oil to apply a predetermined braking force to the door being closed, thereby allowing the door to be closed slowly. The piston in this door closer uses cam members to perform the operation of a spring device for storing a door-returning force as in the above-described conventional door closer. Therefore, the structure can be simplified as compared to the conventional door closer using an inner ring and an outer ring.

Specifically, the door closer may be arranged as follows. The high-pressure side cam member (91) has a high-pressure side cam surface (92) facing the piston and having an annular configuration as seen in the longitudinal axis direction. The high-pressure side cam surface has a bottom portion (92a) provided at a predetermined position in the circumferential direction and a first and second high-pressure side inclined portions (92b and 92c) that are inclined to gradually come closer to the low-pressure side cam member (96) with increasing distance from the bottom portion toward opposite sides in the circumferential direction. The low-pressure side cam member (96) has a low-pressure side cam surface (97) facing the piston and having an annular configuration as seen in the longitudinal axis direction. The low-pressure side cam surface has a bottom portion (97a) aligned with the bottom portion (92a) of the high-pressure side cam surface (92) in the longitudinal axis direction. The low-pressure side cam surface further has a first and second low-pressure side inclined portions (97b and 97c) that are inclined to gradually come closer to the high-pressure side cam member with increasing distance from the bottom portion (97a) toward opposite sides in the circumferential direction and a distal end portion at which the first and second low-pressure side inclined portions intersect each other. When the housing (20) is selectively rotated relative to the stationary shaft (10) in either of the clockwise and counterclockwise door-opening directions about the longitudinal axis from the reference position, the piston (80) is slidingly engaged with either of the first and second high-pressure side inclined portions (92b and 92c) and thus pushed out from the high-pressure oil chamber side toward the low-pressure oil chamber side. When the housing (20) having been rotated in either of the door-opening directions is rotated in a door-closing direction toward the reference position, the piston (80) is slidingly engaged with either of the first and second low-pressure side inclined portions (97b and 97c) and thus pushed out from the low-pressure oil chamber side toward the high-pressure oil chamber side.

More specifically, the door closer may be arranged as follows. The piston (80) has a high-pressure side crest portion (80e) and a low-pressure side crest portion (80i). When the housing (20) is in the reference position, the high-pressure side crest portion (80e) is located in a recess formed by the bottom portion (92a) of the high-pressure side cam surface (92) and the first and second high-pressure side inclined portions (92b and 92c) thereof, which are at the opposite sides of the bottom portion. The high-pressure side crest portion (80e) has a top portion (80a) and a first and second high-pressure side corresponding inclined portions (80b and 80c) corresponding respectively to the bottom portion and the first and second high-pressure side inclined portions in the longitudinal axis direction when the housing is in the reference position. The low-pressure side crest portion (80i) has a top portion (80f) and a first and second low-pressure side corresponding inclined portions (80g and 80h) corresponding respectively to the distal end portion (97d) of the low-pressure side cam surface (97) and the first and second low-pressure side inclined portions (97b and 97C) thereof, which are at the opposite sides of the distal end portion, in the longitudinal axis direction when the housing (20) is in the reference position.

The door closer may further include a spring device provided at one side of the damper device in the longitudinal axis direction. The spring device has a coil spring disposed concentrically around the stationary shaft and a first hook provided in the housing and connected to one end of the coil spring. The first hook is engaged and held stationary by the stationary shaft when the housing is rotated in one circumferential direction from a reference position. The first hook rotates relative to the stationary shaft when the housing is rotated in the other circumferential direction from the reference position. The spring device further has a second hook provided in the housing and connected to the other end of the coil spring. The second hook is engaged and held stationary by the stationary shaft when the housing is rotated in the other circumferential direction from the reference position. The second hook rotates relative to the stationary shaft when the housing is rotated in the one circumferential direction from the reference position.

In this door closer, unlike in the above-described conventional door closer, the spring device and the damper device do not use a mutual actuating member to actuate them. Therefore, the spring device and the damper device may be disposed on either side in the axial direction, and hence the structure can be simplified.

Even more specifically, the door closer may be arranged as follows. The stationary shaft has a first stationary pin and a second stationary pin diametrically extending at positions corresponding to the first hook and the second hook, respectively, and having end portions projecting from the stationary shaft. The housing has a first driving pin and a second driving pin projecting inward of the housing at positions corresponding to the first hook and the second hook, respectively. The first hook has a first engaging portion that is engaged and held stationary by the first stationary pin when the housing is rotated in the one circumferential direction and that is engaged with the first driving pin and rotated together with the housing when the housing is rotated in the other circumferential direction. The second hook has a second engaging portion that is engaged and held stationary by the second stationary pin when the housing is rotated in the other circumferential direction and that is engaged with the second driving pin and rotated together with the housing when the housing is rotated in the one circumferential direction.

### Brief Description of the Drawings:

Fig. 1 is a diagram showing a mode of use of the door closer according to the present invention.
Fig. 2 is a vertical sectional view showing an embodiment of the door closer according to the present invention.
Fig. 3a is a perspective view of a second hook used in the door closer shown in Fig. 2.
Fig. 3b is a perspective view of a first hook used in the door closer shown in Fig. 2.
Fig. 4a is a sectional view as seen in the direction of the arrow 4A-4A in Fig. 2, showing the relationship between the first and second hooks and elements associated therewith.
Fig. 4b is a sectional view as seen in the direction of the arrow 4B-4B in Fig. 2, showing the relationship between the first and second hooks and elements associated therewith.

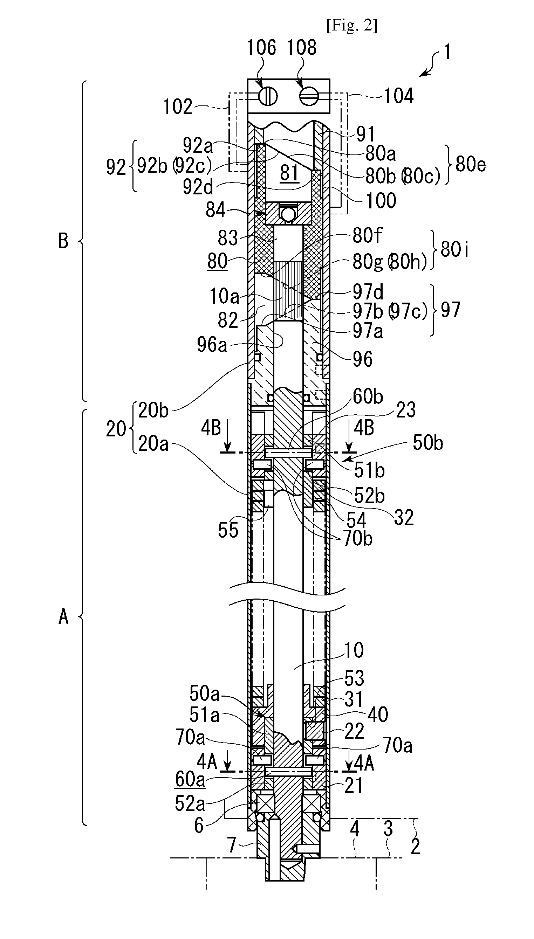

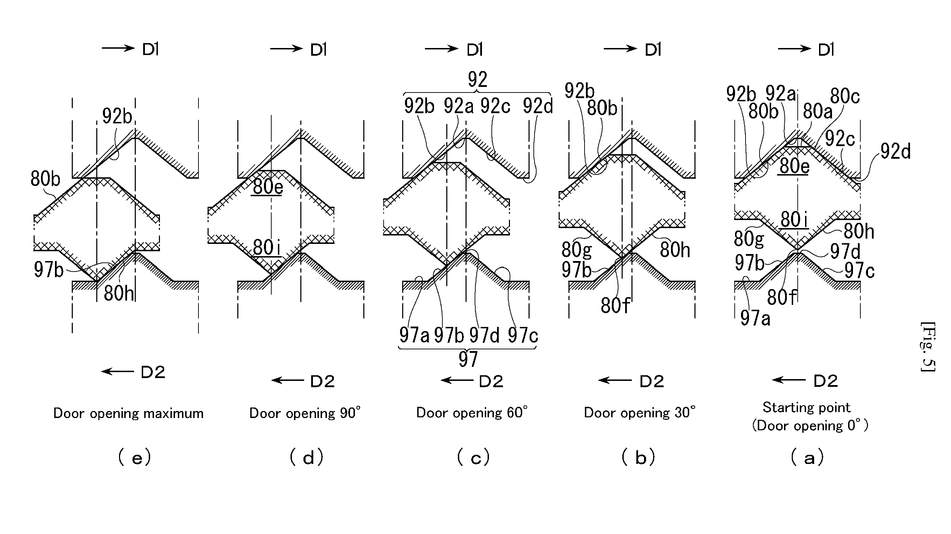

Fig. 5 is a diagram showing the relationship between high- and low-pressure side cam members and cam-facing surfaces of a piston moved by the cam members, which constitute a damper device of the door closer shown in Fig. 2, of which: part (a) shows the relationship when the door is in a closed position; part (e) shows the relationship when the door is in a fully opened position; and parts (b) to (d) each show the relationship when the door is in an intermediate open position between the closed position and the fully opened position (it should be noted that, in Fig. 5, the positions of the respective cam surfaces of the high- and low-pressure side cam members are shown displaced relative to each other by 180 degrees in comparison with Fig. 2 in order to clarify their mutual relationship changing as the door is opened or closed.
Fig. 6 is a vertical sectional view showing a conventional door closer.

### Best Mode for Carrying Out the Invention:

An embodiment of the door closer according to the present invention will be explained below in detail with reference to the accompanying drawings.

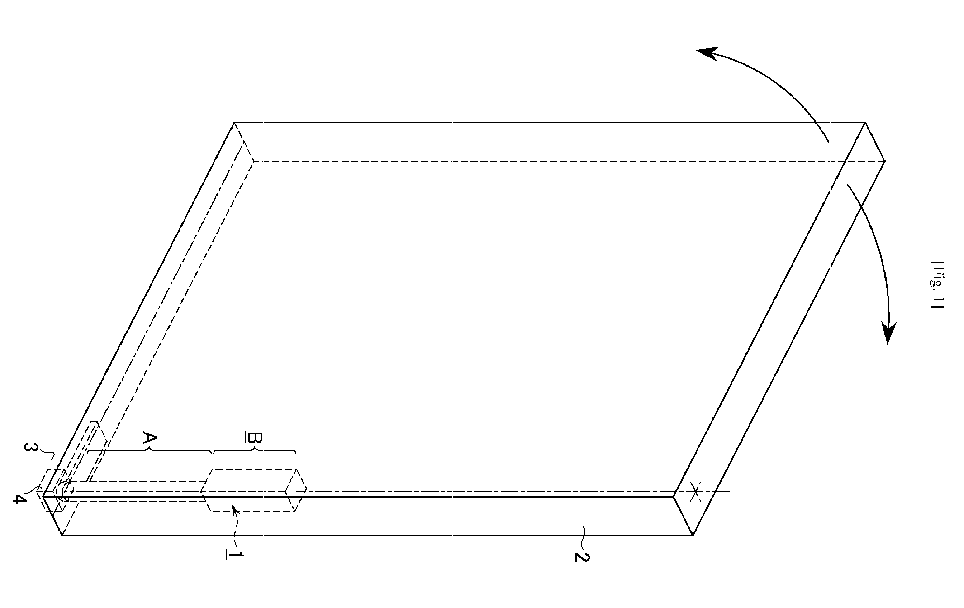

As shown in Figs. 1 and 2, a door closer 1 according to the present invention has a stationary shaft 10 vertically secured through a securing member 7 to a retaining seat 4 buried in a floor serving as a frame 3 of a door opening. The door closer 1 further has a circular cylindrical housing 20 disposed concentrically around the stationary shaft 10 and secured to and rotatable together with the door about the longitudinal axis of the stationary shaft 10. The housing 20 has a first housing part 20a and a second housing part 20b. The first housing part 20a is provided therein with a spring device A that stores, when the door is opened, an urging force for closing the door. The second housing part 20b is provided therein with a damper device B that brakes the door 2 when urged to close.

The spring device A has a coil spring 30, a first hook 50a, and a second hook 50b. The coil spring 30 is concentrically disposed around the stationary shaft 10. The first hook 50a is connected to the lower end 31 of the coil spring 30 through a spring seat 40. When the housing 20 is rotated in one direction from a reference position (i.e. when the door to which the housing is secured is opened to either the left or right from a closed position), the first hook 50a is engaged and held stationary by the stationary shaft 10 to prevent rotation of the lower end of the coil spring 30. When the housing 20 is rotated in the other direction from the reference position, the first hook 50a rotates relative to the stationary shaft 10 to rotate the lower end of the coil spring. The second hook 50b is connected to the upper end 32 of the coil spring 30. When the housing 20 is rotated in the other direction from the reference position, the second hook 50b is engaged and held stationary by the stationary shaft 10. When the housing 20 is rotated in the one direction from the reference position, the second hook 50b rotates relative to the stationary shaft 10 to rotate the upper end 32 of the coil spring. That is, when the door is opened, regardless of whether it is opened to the left or right, the first hook is rotated in the same direction relative to the second hook (in other words, the second hook is rotated in the same direction relative to the first hook) so that the coil spring is wound up.

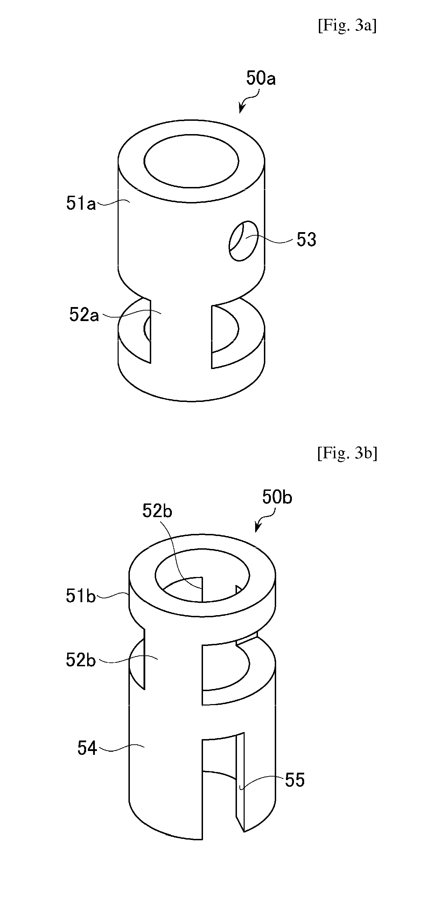

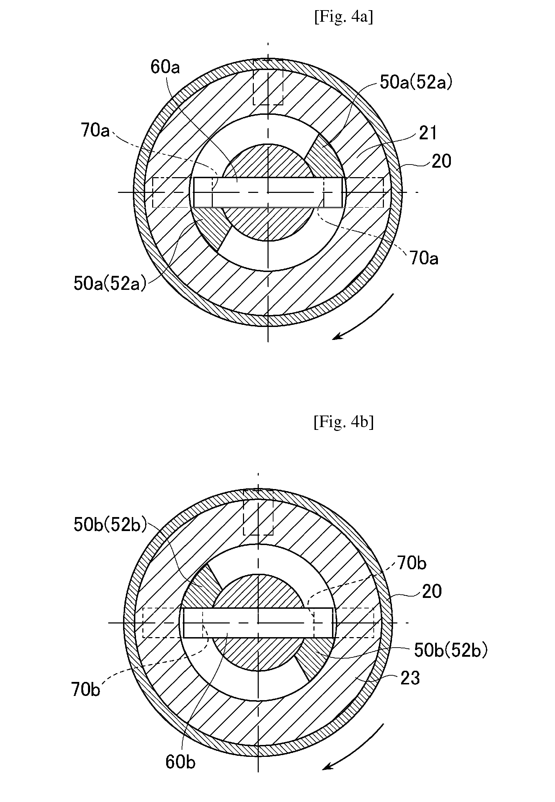

Specifically, the first hook 50a has, as shown in Fig. 3a, a circular cylindrical portion 51a and a pair of engaging portions 52a (only one engaging portion 52a is shown in Fig. 3a) axially extending from respective diametrically opposing positions of the cylindrical portion and connected to each other at the respective distal ends thereof by an annular member. The cylindrical portion 51a has a hole 53, which is fitted with a pin 22 extending from the spring seat 40. Thus, the first hook 50a is installed rotatably about the stationary shaft 10. The second hook 50b is installed rotatably about the stationary shaft 10 and has a circular cylindrical portion 51b and a pair of engaging portions 52b, which are similar to those of the first hook 50a. The second hook 50b further has a circular cylindrical portion 54 formed at the distal (lower) ends of the engaging portions 52b. The cylindrical portion 54 is provided with a retaining groove 55 that receives and retains the upper end portion of the coil spring 30. The stationary shaft 10 has diametrically extending first and second stationary pins 60a and 60b in correspondence to the first and second hooks 50a and 50b, respectively. The housing 20 has a pair of first and second driving pins 70a and 70b secured to its inner wall through securing tubes 21 and 22 at respective diametrically opposing positions of the housing 20. The opposite end portions of the first stationary pin 60a and the pair of first driving pins 70a are inserted into respective spaces defined between the pair of engaging portions 52a of the first hook 50a. The opposite end portions of the second stationary pin 60b and the pair of second driving pins 70b are inserted into respective spaces defined between the pair of engaging portions 52b of the second hook 50a. When the housing 20 is in a reference position (door closed position), the opposite end portions of the first stationary pin 60a and the pair of first driving pins 70a and the opposite end portions of the second stationary pin 60b and the pair of second driving pins 70b are positionally related to the engaging portions 52a and 52b of the first and second hooks, respectively, as shown in Figs. 4a and 4b, which are a sectional view as seen in the direction of the arrow 4A-4A in Fig. 2 and a sectional view as seen in the direction of the arrow 4B-4B in Fig. 2, respectively. If the housing 20 is rotated clockwise in Figs. 4a and 4b from the reference position, for example, the first hook 50a is engaged and held at the engaging portions 52a by the first stationary pin 60a, while the second hook 50b is rotated clockwise by the second driving pins 70b rotated together with the housing 20. The coil spring 30 has been wound clockwise as seen from the direction of the arrow B-B in Fig. 2 and is therefore wound up by the above-described rotation of the second hook 50b to store an urging force for closing the door. Conversely, if the housing 20 is rotated counterclockwise from the reference position, the first hook 50a is rotated counterclockwise by the first driving pins 70a rotated together with the housing, while the second hook 50b is engaged and held by the second stationary pin 60b. Therefore, the coil spring 30 is similarly wound up.

The damper device B has a high-pressure side cam member 91 and a low-pressure side cam member 96 secured to the upper and lower ends, respectively, of the second housing part 20b. The damper device B further has a piston 80 displaceable between the cam members 91 and 96 in the axial direction of the shaft 10. The low-pressure side cam member 96 concentrically connects and secures together the upper end of the first housing part 20a and the lower end of the second housing part 20b and has a through-hole 96a that passes the stationary shaft 10 therethrough. The piston 80 has an inner communicating passage 83 for communication between a high-pressure oil chamber 81 formed between the piston and the high-pressure side cam member 91 and a low-pressure oil chamber 82 formed between the piston and the low-pressure side cam member 96. The inner communicating passage 83 is fitted with a check valve 84. The upper end portion 10a of the stationary shaft 10 is inserted into and serration-connected to a portion of the inner communicating passage 83 below the check valve 84 to allow axial displacement but prevent rotation of the piston 80 relative to the stationary shaft 10.

The high-pressure side cam member 91 has a high-pressure side cam surface 92 facing the piston 80 and having an annular configuration as seen in the axial direction. The high-pressure side cam surface 92 has a bottom portion 92a provided at a predetermined position in the circumferential direction and a first and second high-pressure side inclined portions 92b and 92c that are inclined to gradually come closer to the low-pressure side cam member with increasing distance from the bottom portion 92a toward opposite sides of the bottom portion in the circumferential direction and that reach a distal end portion 92d located diametrically opposite to the bottom portion 92a.

The low-pressure side cam member 96 has a low-pressure side cam surface 97 facing the piston 80 and having an annular configuration as seen in the longitudinal axial direction. The low-pressure side cam surface 97 has a bottom portion 97a axially aligned with the bottom portion 92a of the high-pressure side cam surface 92 and a first and second low-pressure side inclined portions 97b and 97c that are inclined to gradually come closer to the high-pressure side cam member with increasing distance from the bottom portion 97a toward opposite sides of the bottom portion 97a in the circumferential direction and that reach a distal end portion 97d located diametrically opposite to the bottom portion 97a.

The action of the high-pressure side cam member 91 and the low-pressure side cam member 96 on the piston 80 will be explained below with reference to Fig. 5. In Fig. 5: part (a) shows the relationship between the cam members 91 and 96 and the piston 80 when the door is in a closed position; part (e) shows the relationship when the door is in a fully opened position; and parts (b) to (d) each show the relationship when the door is in an intermediate open position between the closed position and the fully opened position. It should be noted that, in Fig. 5, the positions of the respective cam surfaces 92 and 97 of the high- and low-pressure side cam members are shown displaced relative to each other by 180 degrees in comparison with Fig. 2 in order to clarify their mutual relationship changing as the door is opened or closed. Correspondingly thereto, a high-pressure side crest portion 80e and low-pressure side crest portion 80i of the piston 80, which will be explained below, are also shown displaced relative to each other by 180 degrees.

As shown in part (a) of Fig. 5, the piston 80 has a high-pressure side crest portion 80e that, when the housing 20 is in a predetermined reference position (door closed position), is located in a recess formed by the bottom portion 92a of the high-pressure side cam member 91 and the first and second high-pressure side inclined portions 92b and 92c thereof, which are at the opposite sides of the bottom portion 92a. The high-pressure side crest portion 80e comprises a top portion 80a and a first and second high-pressure side corresponding inclined portions 80b and 80c corresponding respectively to the bottom portion 92a and the first and second high-pressure side inclined portions 92b and 92c when the housing 20 is in the reference position (door closed position). The piston 80 further has a low-pressure side crest portion 80i comprising a top portion 80f and a first and second low-pressure side corresponding inclined portions 80g and 80h corresponding respectively to the distal end portion 97d of the low-pressure side cam member 96 and the first and second low-pressure side inclined portions 97b and 97c thereof, which are at the opposite sides of the distal end portion 97d, when the housing 20 is in the reference position (door closed position).

If the housing 20 is rotated from the reference position shown in part (a) of Fig. 5 to the rightward direction D1 shown therein, for example, the high- and low-pressure side cam members are also rotated in the same direction D1. Consequently, the first high-pressure side inclined portion 92b of the high-pressure side cam member presses against the first high-pressure side corresponding inclined portion 80b of the piston, which corresponds to the first high-pressure side inclined portion 92b. Because the piston 80 is serration-connected to the stationary shaft 10 so as to be nonrotatable, the piston 80 is not rotated but axially depressed toward the low-pressure side cam member by the pressure in the direction D1 applied from the first high-pressure side inclined portion 92b. At this time, the second low-pressure side corresponding inclined portion 80h of the low-pressure side crest portion 80i of the piston slides on the first low-pressure side inclined portion 97b of the low-pressure side cam member. When the door is fully opened, the relationship between the high- and low-pressure side cam members and the piston is as shown in part (e) of Fig. 5. Conversely, if the housing 20 is rotated in the direction D2 as the opened door is started to be closed, the first low-pressure side inclined portion 97h of the low-pressure side cam member presses against the second low-pressure side corresponding inclined portion 80h of the piston to push up the piston 80 toward the high-pressure side cam member.

When the door is opened in the opposite direction to the above, the high-pressure side cam member pushes down the piston in the same way as the above, and when the opened door is closed, the low-pressure side cam member similarly pushes up the piston.

Thus, when the door is opened, regardless of whether it is opened to the left or right, the piston 80 is pushed down, causing the oil in the low-pressure oil chamber 82 to be sent into the high-pressure oil chamber 81 through the space between the stationary shaft 10 and the piston 80, which are serration-connected to each other, and through the check valve 84. Accordingly, the resistance that the piston encounters at this time is small, so that the door can be opened with a reduced resistance.

In contrast to the above, when the door is urged to be closed and thus the piston 80 is pushed up toward the high-pressure side cam member, the check valve 84 is closed, and hence the oil in the high-pressure oil chamber 81 is pressurized and sent into the low-pressure oil chamber 82 through a gap 100 formed between the outer peripheral surface of the piston 80 and the inner peripheral surface of the second housing part 20b and through an outer communicating passage (described below) communicated with the gap. That is, the outer communicating passage comprises a first and second communicating passages 102 and 104 communicated with the gap 100 at axially different positions and a third communicating passage connected to the first and second communicating passages and disposed at the rear side of the second housing part 20b as viewed in Fig. 2 to communicate with the low-pressure oil chamber 82. The first and second communicating passages are provided with resistance control means 106 and 108, respectively, thereby allowing adjustment of the flow path resistance. When the door is in a fully opened position, the gap 100 is in communication with the first and second communicating passages 102 and 104. Accordingly, if the door in this position is started to be closed, the oil pushed out of the high-pressure oil chamber 81 is passed through the first and second communicating passages 102 and 104 and therefore sent into the low-pressure oil chamber 82 while encountering a relatively small flow path resistance. When the door comes close to the closed position, the communication between the gap 100 and the second communicating passage 104 is cut off, and the oil is sent into the low-pressure oil chamber through the first communicating passage 102 having an increased flow path resistance. Accordingly, the door is closed slowly,

Although one embodiment of the door closer according to the present invention has been described above, the door closer of the present invention is not limited to the foregoing embodiment but can be modified in a variety of ways without departing from the gist of the present invention. For example, the spring seat 40 is not necessarily needed. The lower end of the coil spring may be connected directly to the first hook 50a. In addition, the configuration of the cam surfaces of the high- and low-pressure side cam members and the configuration of the portions of the piston corresponding to the cam surfaces may be modified in a variety of ways according to need.

## Claims

1. A swing door closer comprising:
a stationary shaft secured to a door opening frame;
a cylindrical housing installed concentrically around the stationary shaft and secured to a door rotatably about a longitudinal axis of the stationary shaft together with the door; and
a damper device installed in the housing;
the damper device including:
a piston installed in the housing displaceably relative to the stationary shaft in a direction of the longitudinal axis but nonrotatably relative to the stationary shaft around the longitudinal axis;
a high-pressure oil chamber provided in the housing at one side of the piston in the direction of the longitudinal axis;
a low-pressure oil chamber provided in the housing at an other side of the piston in the direction of the longitudinal axis;
an inner communicating passage extending through the piston in the direction of the longitudinal axis to communicate between the high-pressure oil chamber and the low-pressure oil chamber;
a check valve provided in the inner communicating passage, the check valve allowing oil to flow from the low-pressure oil chamber into the high-pressure oil chamber when the piston is displaced from a high-pressure oil chamber side toward a low-pressure oil chamber side but cutting off communication between the low-pressure oil chamber and the high-pressure oil chamber when the piston is displaced from the low-pressure oil chamber side toward the high-pressure oil chamber side;
an outer communicating passage communicating between the high-pressure oil chamber and the low-pressure oil chamber to pass oil in the high-pressure oil chamber pressurized by the piston to the low-pressure oil chamber when the piston is displaced from the low-pressure oil chamber side toward the high-pressure oil chamber side, the outer communicating passage having a larger fluid resistance than the inner communicating passage and giving a resistance to displacement of the piston from the low-pressure oil chamber side toward the high-pressure oil chamber side; and
a cam mechanism having a high-pressure side cam member provided in and secured to the housing at a high-pressure oil chamber side of the piston in the direction of the longitudinal axis and a low-pressure side cam member provided in and secured to the housing at a low-pressure oil chamber side of the piston, wherein, when the housing is selectively rotated relative to the stationary shaft in either of clockwise and counterclockwise door-opening directions about the longitudinal axis from a reference position, the high-pressure side cam member pushes out the piston from the high-pressure oil chamber side toward the low-pressure oil chamber side, and when the housing having been rotated in either of the door-opening directions is rotated in a door-closing direction toward the reference position, the low-pressure side cam member pushes out the piston from the low-pressure oil chamber side toward the high-pressure oil chamber side.

2. The swing door closer of claim 1, wherein the high-pressure side cam member has a high-pressure side cam surface facing the piston and having an annular configuration as seen in the direction of the longitudinal axis, the high-pressure side cam surface having a bottom portion provided at a predetermined position in a circumferential direction and a first and second high-pressure side inclined portions that are inclined to gradually come closer to the low-pressure side cam member with increasing distance from the bottom portion toward opposite sides of the bottom portion in the circumferential direction;
the low-pressure side cam member having a low-pressure side cam surface facing the piston and having an annular configuration as seen in the direction of the longitudinal axis, the low-pressure side cam surface having a bottom portion aligned with the bottom portion of the high-pressure side cam surface in the direction of the longitudinal axis, the low-pressure side cam surface further having a first and second low-pressure side inclined portions that are inclined to gradually come closer to the high-pressure side cam member with increasing distance from the bottom portion toward opposite sides of the bottom portion in the circumferential direction and a distal end portion at which the first and second low-pressure side inclined portions intersect each other;
wherein, when the housing is selectively rotated relative to the stationary shaft in either of the clockwise and counterclockwise door-opening directions about the longitudinal axis from the reference position, the piston is pressed and engaged with either of the first and second high-pressure side inclined portions of the high-pressure side cam member secured to the housing and thus pushed out from the high-pressure oil chamber side toward the low-pressure oil chamber side, and when the housing having been rotated in either of the door-opening directions is rotated in a door-closing direction toward the reference position, the piston is slidingly engaged with either of the first and second low-pressure side inclined portions of the low-pressure side cam member secured to the housing and thus pushed out from the low-pressure oil chamber side toward the high-pressure oil chamber side.

3. The swing door closer of claim 2, wherein the piston has a high-pressure side crest portion and a low-pressure side crest portion;
the high-pressure side crest portion being located, when the housing is in the reference position, in a recess formed by the bottom portion of the high-pressure side cam surface and the first and second high-pressure side inclined portions thereof which are at opposite sides of the bottom portion, and having a top portion and a first and second high-pressure side corresponding inclined portions corresponding respectively to the bottom portion and the first and second high-pressure side inclined portions in the direction of the longitudinal axis when the housing is in the reference position;
the low-pressure side crest portion having a top portion and a first and second low-pressure side corresponding inclined portions corresponding respectively to the distal end portion of the low-pressure side cam surface and the first and second low-pressure side inclined portions thereof which are at opposite sides of the distal end portion, in the direction of the longitudinal axis when the housing is in the reference position.

4. The door closer of any of claims 1 to 3, further comprising a spring device provided at one side of the damper device in the direction of the longitudinal axis, the spring device including:
a coil spring disposed concentrically around the stationary shaft;
a first hook provided in the housing and connected to one end of the coil spring, the first hook being engaged and held stationary by the stationary shaft when the housing is rotated in one circumferential direction from the reference position, the first hook rotating relative to the stationary shaft when the housing is rotated in an other circumferential direction from the reference position; and
a second hook provided in the housing and connected to the other end of the coil spring, the second hook being engaged and held stationary by the stationary shaft when the housing is rotated in the other circumferential direction from the reference position, the second hook rotating relative to the stationary shaft when the housing is rotated in the one circumferential direction from the reference position.

5. The door closer of claim 4, wherein the stationary shaft has a first stationary pin and a second stationary pin diametrically extending at positions corresponding to the first hook and the second hook, respectively, and having end portions projecting from the stationary shaft;
the housing having a first driving pin and a second driving pin projecting inward of the housing at positions corresponding to the first hook and the second hook, respectively;
the first hook having a first engaging portion that is engaged and held stationary by the first stationary pin when the housing is rotated in the one circumferential direction and that is engaged with the first driving pin and rotated together with the housing when the housing is rotated in the other circumferential direction; and
the second hook has a second engaging portion that is engaged and held stationary by the second stationary pin when the housing is rotated in the other circumferential direction and that is engaged with the second driving pin and rotated together with the housing when the housing is rotated in the one circumferential direction.
